**Europäisches Patentamt**

**European Patent Office**

**Office européen des brevets**

(19)

(11) Veröffentlichungsnummer: **0 121 589**
**B1**

(12)

# EUROPÄISCHE PATENTSCHRIFT

(45) Veröffentlichungstag der Patentschrift:
**28.10.87**

(21) Anmeldenummer: **83108325.8**

(22) Anmeldetag: **24.08.83**

(51) Int. Cl.⁴: **B 23 K 7/02**, B 22 D 11/126

(54) **Brennschneidmaschine.**

(30) Priorität: **29.03.83 DE 8309246 U**

(43) Veröffentlichungstag der Anmeldung:
**17.10.84 Patentblatt 84/42**

(45) Bekanntmachung des Hinweises auf die Patenterteilung:
**28.10.87 Patentblatt 87/44**

(84) Benannte Vertragsstaaten:
**AT BE CH DE FR GB IT LI**

(56) Entgegenhaltungen:
**EP - A - 0 074 474**
**DE - A - 2 925 419**
**DE - U - 8 309 246**
**US - A - 3 227 432**
**US - A - 3 953 005**

(73) Patentinhaber: **AUTE Gesellschaft für autogene Technik mbH, Zollikerstrasse 228, CH-8029 Zürich (CH)**

(72) Erfinder: **Lotz, Horst K., Kiefernweg 13, D-6238 Hofheim-Delkenheim (DE)**

(74) Vertreter: **Blumbach Weser Bergen Kramer Zwirner Hoffmann Patentanwälte, Sonnenbergerstrasse 43, D-6200 Wiesbaden 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Brennschneidmaschine zum Zerteilen von sich bewegenden Strängen, insbesondere Knüppeln, mit einem stirnseitig am Maschinengehäuse angeordneten Brenner, der schwenkbar gelagert ist und während des Schneidvorgangs eine in Schneidrichtung verlaufende Schwenkbewegung etwa rechtwinklig zur Strangvorschubrichtung ausführt, wobei die Brennschneidmaschine sich synchron mit dem Strang bewegt.

Bei einer derartigen Brennschneidmaschine, bei der der Brenner eine Schwenkbewegung ausführt (US-A3 953 005) bereitet es Schwierigkeiten, dem Brenner bei seiner Bewegung eine Bartbeseitigungsdüse zuzuordnen. Dieses ist bei geradlinigen, nicht um eine Achse verschwenkenden Bewegungen (DE-A1-2 925 419) bekannt, wobei durch die Art der zugeordneten Bewegungen das räumliche Verhältnis zwischen Brenner und Bartbeseitigungsdüse aufrecht erhalten bleibt, so dass bei der Anordnung der Bartbeseitigungsdüse, die sehr hohe Genauigkeit erfordert, keine besonderen Schwierigkeiten bestehen.

Der Erfindung liegt daher die Aufgabe zugrunde, eine Brennschneidmaschine der eingangs genannten Art verfügbar zu machen, die mit einer Bartbeseitigungsdüse ausgerüstet ist, obwohl der Brenner schwenkbar gelagert ist, wobei eine hohe Betriebssicherheit in kostengünstiger Weise erzielt werden soll.

Die Erfindung besteht darin, dass dem sich vom Maschinengehäuse zum Giessstrang erstreckenden Brenner eine Bartbeseitigungseinrichtung zugeordnet ist, die mit dem Brenner eine Schwenkbewegung ausführt und die aus einer Gaszuführröhre und einer diese abschliessenden Bartbeseitigungsdüse besteht, wobei eine Einrichtung, beispielsweise ein Getriebe, vorgesehen ist, die den Brenner schneller bewegt als die Bartbeseitigungseinrichtung, und dass die Bartbeseitigungsdüse in ihrer Betriebsstellung einen Gasstrom etwa rechtwinklig zum Gasaustritt des Brenners aussendet, wobei der Düsenaustritt der Bartbeseitigungsdüse etwa im Bereich der Seitenfläche des Giessstrangs endet, wenn der Strang vollständig durchgeschnitten ist, so dass der von der Bartbeseitigungsdüse ausgehende Gasstrom an der Unterfläche des Giessstrangs entlangstreicht.

Um eine Verlagerung des Schlackenbartes zu vermeiden, schlägt die Erfindung weiter vor, dass der Bartbeseitigungsdüse etwa in einer Ebene senkrecht oder auch winklig zum Schneidstrahl eine Gegenstromdüse zugeordnet ist, die die Schlacke herunterdrückt.

Eine vorteilhafte Ausführungsform zeichnet sich dadurch aus, dass die erste Bartbeseitigungsdüse einen Luft-, Sauerstoff- oder Gas-Sauerstoff-Gemischstrom in einem breiten Band aussendet, so dass die Einstellungsgenauigkeit die Bartbeseitigungswirkung nicht beeinträchtigt und die Gegenstromdüse zum zusätzlichen Heizen und dadurch Flüssighalten der Schlacke dient.

Zweckmässig ist die Bartbeseitigungsdüse als Viellochdüse mit einer grossen Anzahl von Gasaustritten ausgebildet oder besteht aus einem quer verlaufenden Schlitz von vorzugsweise 6 mm Breite und 26 mm Länge oder aus zwei Bohrungen, die durch einen Schlitz verbunden sind, dessen Breite geringer als der Durchmesser der Bohrungen ist.

Zum Schutz gegen die dabei auftretende Wärme ist die Brennschneidmaschine mit einem Kühlmantel versehen, der sich dadurch auszeichnet, dass er einen offenen Einlaufstutzen aufweist, in den Kühlwasser aus einer Kühlwasserzuführleitung fliesst, und das Kühlwasser aus einem offenen Ablaufstutzen den Kühlmantelhohlraum verlässt, dass die offene Maschinenkühlung auch die Brennerkühlung umfasst, indem aus dem Kühlmantel über den Brenner kühlende Kanäle oder hohl ausgestaltete Anklemmhebel austreten, und dass das Wasser vom Kühlmantel durch hohl ausgestaltete Anklemmhebel strömt und im Bereich des Endes der Anklemmhebel austritt, wobei die Strömung des Kühlwassers vorzugsweise durch geeignete Querschnitte reguliert ist und die Kühlwasserhohlräume eine Mindestreserve an Kühlmittel sicherstellen, so dass bei vorübergehender Störung in der Kühlwasserzuführung die Brennschneidmaschine geschützt ist.

Eine zweckmässige Weiterbildung der Erfindung besteht darin, dass im Gehäuse der Brennschneidmaschine ein erster Schneidbewegungsantrieb und ein zweiter Höhenverstellungsantrieb vorgesehen sind und dass von beiden Antrieben gesonderte Antriebswellen aus dem Gehäuse zum Brenner sich erstrecken, dass die Welle für den Schneidbewegungsantrieb fest gelagert ist und an ihrem Ende den Brenner mit einer Schlittenführung für die Höhenverstellung trägt, dass die Welle für den Höhenverstellungsantrieb an ihren dem Antrieb gegenüberliegenden Ende ein Zahnrad aufweist, das in eine Zahnstange eingreift, die auf der Schlittenführung des Brenners befestigt ist und dass die Welle für den Höhenverstellungsantrieb als biegsame Welle oder Gelenkwelle ausgebildet ist.

Eine andere Ausbildung der Erfindung besteht darin, dass für jedes zuzuführende Medium, wie Schneidsauerstoff, Heizsauerstoff und Heizgas eine Ringleitung vorgesehen ist, von der Versorgungsleitungen für die einzelnen Brenner abgehen, und für die ein gemeinsamer Regler in der Zuführleitung zur Ringleitung vorgesehen ist, und dass in den Vesorgungsleitungen zwischen Ringleitung und Brenner Schnellentlüftungsventile angeordnet sind, die vorzugsweise unmittelbar am Austritt der Versorgungsleitungen aus der Ringleitung sitzen.

Dabei ist zweckmässig vorgesehen, dass die Gaszuführungen zur Ringleitung und die Steuertafel mit den zugeordneten Reglern wahlweise links oder rechts vom Giessstrang montierbar sind, wobei auf die Sauerstoffzuführung zur Schneiddüse und Bartbeseitigungs- und Zünddüse durch die Ringleitung erfolgt und ein Rahmen der Brennschneidmaschine als Ringleitung dient.

In vorteilhafter Weise findet zur Betätigung der Anklemmhebel Sauerstoff oder Heizgas Verwendung, wobei vorzugsweise zwischen den Anklemmhebeln ein Balgzylinder vorgesehen ist, in den Schneidsauerstoff oder Heizgas einleitbar ist.

Bei mehreren Brennschneidmaschinen ist gemäss der Erfindung zweckmässig vorgesehen, dass zwischen diesen Doppelschienen vorgesehen sind, auf denen die Laufräder benachbarter Brennschneidmaschinen gemeinsam laufen, und dass vorzugsweise in der Mitte der Doppelschienen zwischen den Laufrädern der benachbarten Brennschneidmaschinen nach oben verlaufende Stege abgestützt sind, die einen Laufsteg zur Begehung der Brennschneidmaschine tragen.

Die Erfindung soll nachstehend anhand von Ausführungsbeispielen unter Bezugnahme auf die beigefügten Zeichnungen näher erläutert werden, wob ei gleiche Bezugszeichen in den verschiedenen Zeichnungen sich auf gleiche Teile beziehen. In den Zeichnungen zeigen:

Fig. 1 eine seitliche Ansicht einer Brennschneidmaschine mit einer Bartbeseitigungseinrichtung;

Fig. 2 eine Vorderansicht auf die Brennschneidmaschine nach Fig. 1, in Strangrichtung gesehen;

Fig. 3 eine Seitenansicht einer abgewandelten Ausführungsform einer Brennschneidmaschine nach Fig. 1;

Fig. 4 eine Vorderansicht auf die Brennschneidmaschine in Fig. 1, in Giessstrangrichtung gesehen, wobei die Anfangsstellung dargestellt ist;

Fig. 5 einer der Fig. 4 entsprechende Ansicht, die den Brenner in der Endstellung nach dem Schnitt zeigt;

Fig. 6 eine weitere Ausführungsform der Brennschneidmaschine nach Fig. 3 mit einer Lärmschutzhaube;

Fig. 7 eine Vorderansicht auf eine Brennschneidmaschine nach Fig. 6, in Giessstrangrichtung gesehen, wobei die offene Stellung der Lärmschutzhaube dargestellt ist;

Fig. 8 eine der Fig. 7 entsprechende Ansicht, die die Lärmschutzhaube in geschlossenem Zustand zeigt;

Fig. 9 eine Düsenanordnung an einem runden Werkstück;

Fig. 10 eine der Fig. 9 entsprechende Düsenanordnung an einem rechteckigen Werkstück;

Fig. 11 Ansichten von Düsenaustritten einer Bartbeseitigungsdüse;

Fig. 12 das offene Kühlsystem der Brennschneidmaschine in schematischer Darstellung;

Fig. 13 einen in das offene Kühlsystem nach Fig. 12 einbezogenen Brenner;

Fig. 14 einen in das offene Kühlsystem nach Fig. 12 einbezogenen Anklemmhebel;

Fig. 15 einen Anklemmhebel nach Fig. 14 in veränderter Ausführungsform;

Fig. 16 eine Höhenverstelleinrichtung des Brenners in schematischer Darstellung;

Fig. 17 eine Ringleitung für eine Anlage mit drei Brennschneidmaschinen;

Fig. 18 eine Teilansicht einer Lagerung zweier benachbarter Brennschneidmaschinen.

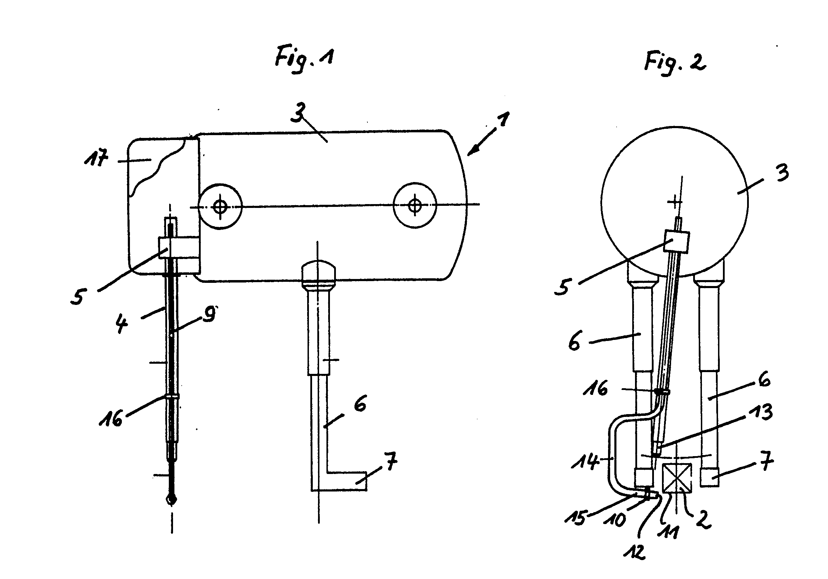

In Fig. 1 ist eine Brennschneidmaschine 1 dargestellt, die zum Zerteilen von sich bewegenden Strängen 2, insbesondere Knüppeln, dient. An dem Maschinengehäuse 3 ist stirnseitig ein Brenner 4 angeordnet, der mittels eines Brennerhalters 5 schwenkbar gelagert ist, so dass er eine in Schneidrichtung verlaufende Schwenkbewegung etwa rechtwinklig zur Vorschubrichtung des Giessstrangs 2 ausführen kann. Während dieses Vorgangs bewegt sich die Brennschneidmaschine 1 synchron zum Strang 2. Diese Synchronbewegung wird durch Klemmarme 6 dargestellt, die an beiden Seiten mit den Klemmbacken 7 an den Giessstrang 2 angedrückt werden, so dass die Brennschneidmaschine 1 mit dem Giessstrang 2 sich mitbewegt. Dem Brenner 4 ist eine Gasbeseitigungsröhre 9 zugeordnet, die an ihrem Ende, wie insbesondere Fig. 2 zeigt, eine Bartbeseitigungsdüse 10 trägt. Die Bartbeseitigungsdüse ist etwa in der Ebene der Unterfläche 11 des Giessstrangs 2 angeordnet, und der Düsenaustritt 12 befindet sich etwa im Bereich der Seitenfläche des Giessstrangs 2, so dass der von der Bartbeseitigungsdüse 10 ausgehende Gasstrom an der Unterfläche 11 des Giessstrangs 2 entlang streicht. Im einzelnen verläuft die Gaszuführungsröhre 9 am Brenner 4 bis in den Bereich hinter der Schneiddüse 13 und von dort in einer seitlich ausladenden Krümmung in ein Endstück 15 etwa in der Ebene der Unterfläche 11 des Giessstrangs 2 oder aber in einer Ebene, die parallel zur Unterfläche 11 des Giessstrangs 2 sich befindet. Die Gaszuführungsröhre 4 ist mit Hilfe von Klemmen 16 am Brenner 4 befestigt, so dass sie mit diesem verschwenkt. Das Austrittsende 12 der Bartbeseitigungsdüse 10 befindet sich dabei etwa in der Verlängerung der Schneidbrennerdüse 13, wie im einzelnen aus Fig. 2 zu ersehen ist. In den Fig. 1 und 2 ist eine Frontabdeckung 17 weggebrochen zum Zweck einer besseren Darstellung der Anordnung des Brenners 4 am Maschinengehäuse 3.

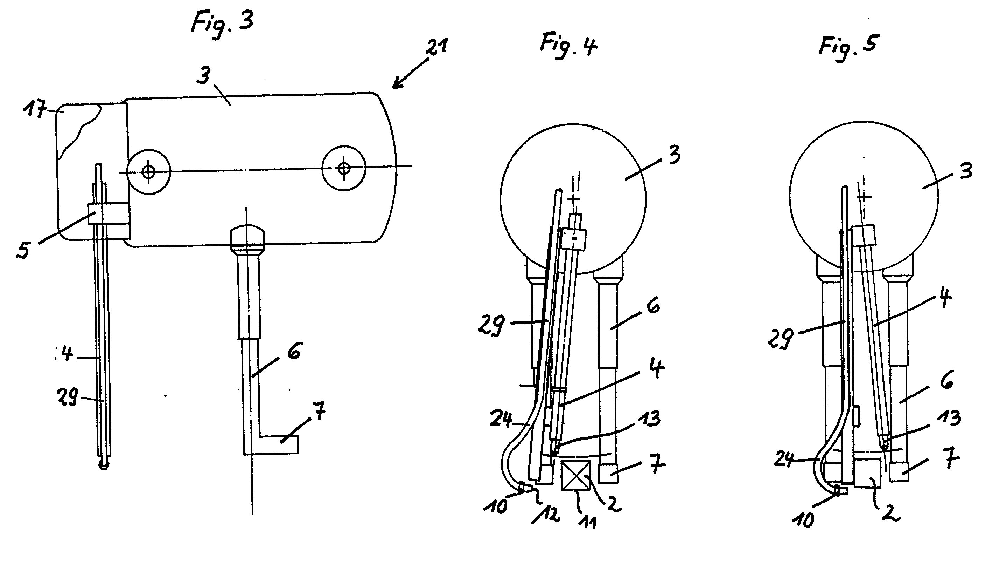

In Fig. 3 ist eine Brennschneidmaschine 21 dargestellt, die weitgehend derjenigen entspricht, wie sie in Fig. 1 gezeigt ist. Soweit gleiche Teile vorhanden sind, sind diese mit den entsprechenden Bezugszeichen von Fig. 1 und 2 bezeichnet. An einem Maschinengehäuse 3, das mit Hilfe der Klemmarme 6, welche Klemmbacken 7 tragen, mit dem Giessstrang eine gemeinsame Bewegung vollführt, ist eine Gaszuführungsröhre 29 seitlich aussen am Brenner 4 angeordnet, und die seitlich ausladende Krümmung 24 ist so gestaltet, dass das Austrittsende 12 der Bartbeseitigungsdüse 10 in einer Längsebene endet, die einen Abstand zur Verlängerung der Schneidbrennerdüse 13 aufweist. Wie Fig. 4 zeigt, wird beim Beginn des Schneidvorgangs die Bartbeseitigungsdüse 10 nicht vom Gasstrom beeinträchtigt, der aus der Schneidbrennerdüse 13 austritt. Ein einzelnes, nicht dargestelltes Getriebe für die Schwenkbewegung bewirkt, dass der Brenner 4 sich schneller bewegt als die Bartbeseitigungseinrichtung mit der Gaszuführröhre 24, so dass in der in Fig. 5 dargestellten Endstellung nach Durchführung des Schneidvorgangs die Bartbeseitigungsdüse 10 sich kurz vor dem Giessstrang 2 befindet, während der Brenner 4 mit der Brennschneiddüse 13 eine Lage hinter dem Giessstrang 2 eingenommen hat.

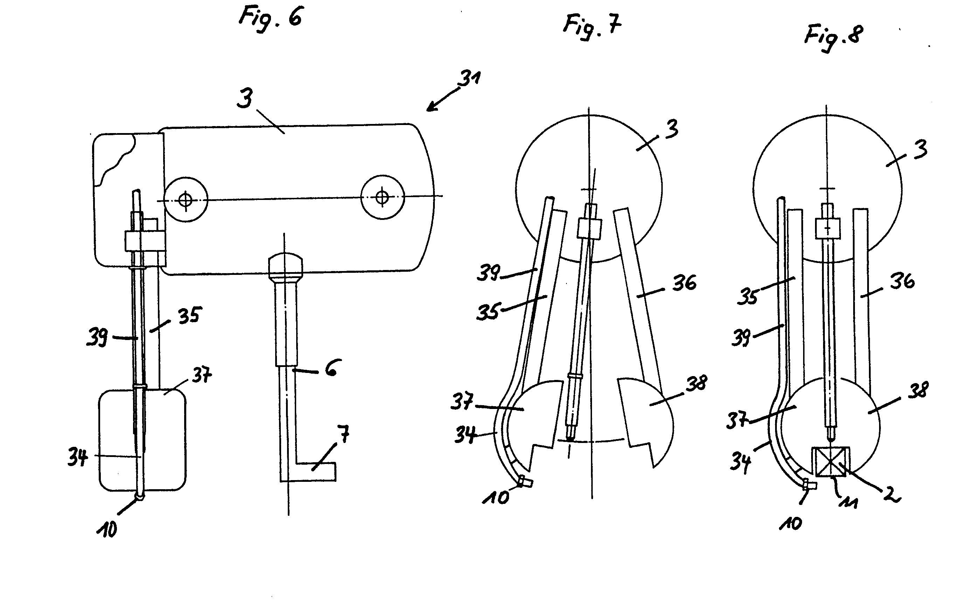

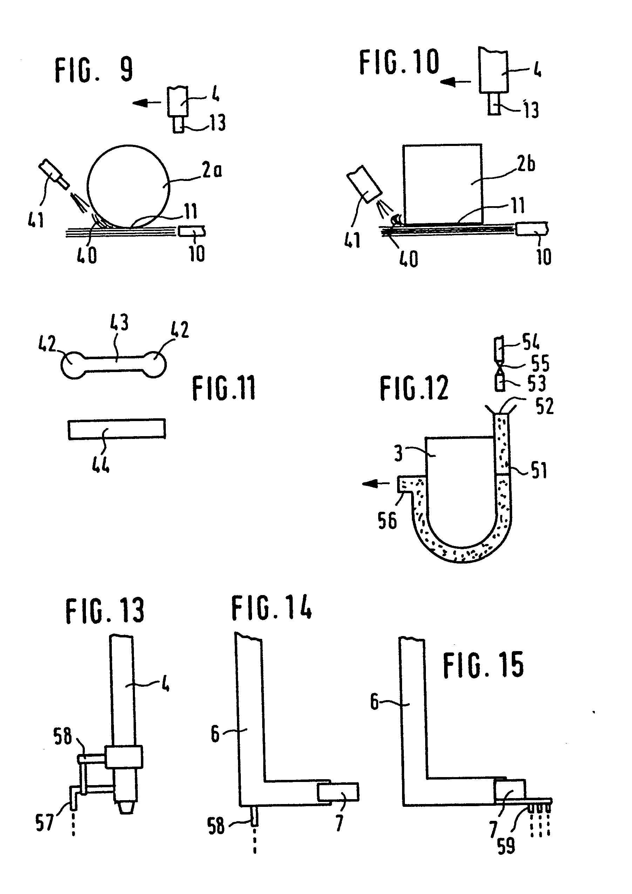

In Fig. 6 ist eine weitere Ausführungsform 31 der Brennschneidmaschine dargestellt. Das Maschinengehäuse 3 besitzt wieder Klemmarme 6 mit Klemmbacken 7, um am Giessstrang 2 befestigt zu werden. Am Maschinengehäuse 3 sind Schwenkarme 35 und 36 angebracht, die an ihrem unteren Ende 2 Lärmschutzhaubenteile 37 und 38 tragen. An einem Schwenkarm 35 ist eine Zuführröhre 39 der Bartbeseitigungseinrichtung angebracht, die mit ihrer seitlich ausladenden Krümmung 34 des Haubenteil 37 umläuft und am Ende wieder die Bartbeseitigungsdüse 10 trägt. In Fig. 7 ist die Lärmschutzhaube 37, 38 in ihrer geöffneten Stellung dargestellt, und Fig. 8 zeigt die geschlossene Lärmschutzhaube 37, 38, wobei die beiden Hälften zusammengeklappt sind, d.h. die beiden Schwenkarme 35, 36 aufeinander zu geschwenkt worden sind. In dieser Stellung befindet sich die Bartbeseitigungsdüse 10 wieder unterhalb der Unterfläche 11 des Giessstrangs 2 in einer Stellung, in der der aus der Bartbeseitigungsdüse 10 austretende Gasstrom an der Unterfläche 11 des Giessstrangs 2 entlang streicht, so dass sich eventuell an der Unterseite ausbildende Schlackenbärte weggeblasen werden. Zu diesem Zweck können auf der der Bartbeseitigungsdüse 10 gegenüberliegenden Seite des Giessstrangs 2 nicht dargestellte Schlackenleitbleche angeordnet sein.

In Fig. 9 ist ein runder Giessstrang 2a dargestellt, der von einem Brenner 4 mit der Schneiddüse 13 zerteilt wird, indem sich der Brenner 4 in Fig. 9 nach links bewegt. Auf diese Weise bildet sich an der Unterseite 11 des Giessstrangs 2a ein Schlackenbart aus, der auf beiden Seiten der Schnittfuge an den Giessstrangstücken sich ankristallisiert. Die Bartbeseitigungsdüse 10 sendet einen Gasstrom aus, der eine solche Ausbildung von Schlackenbärten verhindert, indem die Schlacke weggeblasen bzw. weggedrückt wird. Es bildet sich dann eine nach oben verschobene Schlackenansammlung 40. Um das zu verhindern, ist eine Gegenstromdüse 41 vorgesehen, die die Schlackenansammlung 40 herunterdrückt, so dass sie wieder in den Strömungsstrahl der Bartbeseitigungsdüse 10 gelangt.

Fig. 10 zeigt, wie in ähnlicher Weise bei einem rechteckigen Giessstrang eine Schlackenansammlung 40 auf der der Bartbeseitigungsdüse abgewandten Seite sich ausbildet. Bewegt sich der Brenner 4 nach links und bläst die Bartbeseitigungsdüse 10 an der Unterfläche des Giessstranges 2b die dort sich ansammelnde Schlacke weg, so wird gleichzeitig die Schlackenansammlung 40 auch hier von der Gegenstromdüse 41 wieder in den von der Bartbeseitigungsdüse 10 ausgehenden Gasstrom hineingeblasen.

Von der Bartbeseitigungsdüse 10 wird ein Gasstrom in einem breiten Band ausgesandt, der aus Luft, Sauerstoff oder einem Heizgas-Sauerstoff-Gemisch besteht. Auf diese Weise wird bei Einstellungsungenauigkeiten die Bartbeseitigungswirkung nicht beeinträchtigt, da die Unterfläche 11 des Giessstrangs 2a, 2b in einem breiten Band überstrichen wird.

In Fig. 11 sind Austrittsprofile der Bartbeseitigungsdüse 10 dargestellt. Die Bartbeseitigungsdüse 10 kann aus zwei Bohrungen 42 bestehen, die durch einen Schlitz 43 verbunden sind, dessen Breite geringer als die Durchmesser der Bohrungen 42 ist. Es ist auch möglich, dass die Bartbeseitigungsdüse 10 einfach aus einem querverlaufenden Schlitz 44 besteht. Als eine vorteilhafte Abmessung hat sich eine Bartbeseitigungsdüse mit einem Gasaustrittsquerschnitt von 6 mm Breite und 26 mm Länge erwiesen. Weiter ist es auch möglich, die Bartbeseitigungsdüse 10 als Viellochdüse auszugestalten, bei der das Gas durch eine grosse Anzahl von kleineren Gasaustrittsöffnungen ähnlich einer Pfefferstreubüchse tritt.

Wie aus den Fig. 9 und 10 ersichtlich ist, richtet die Gegenstromdüse 41 einen Gasstrom unter einem Winkel zur Ebene des Gasstroms, der von der Bartbeseitigungsdüse ausgesandt wird. Dieser Winkel ist einstellbar und richtet sich nach den Betriebsgegebenheiten. Um ein Flüssighalten der Schlacke zu gewährleisten, kann die Gegenstromdüse zum zusätzlichen Heissen der Schlackenansammlung 40 dienen. Dabei sollte naturgemäss die kinetische Energie des Gasstromes, den die Gegenstromdüse aussendet, kleiner sein als die kinetische Energie des Gasstroms der Bartbeseitigungsdüse 10.

Eine vorteilhafte Kühlung der Brennschneidmaschine ist schematisch in Fig. 12 dargestellt. Es handelt sich um eine offene Maschinenkühlung, bei der das Maschinengehäuse 3 einen Doppelmantel 51 aufweist. Dieser Doppelmantel 51 wird von Kühlwasser durchströmt, indem in einen offenen Zulauf 52 das Ende 53 einer Zuführleitung 54 mündet, die mit einem Absperrventil 55 versehen ist. Auf diese Weise sind keine besonderen Aufwendungen für die Zuführung des Kühlwassers erforderlich, indem eine normale Wasserleitung mit Absperrventil 55 den Doppelmantel 51 des Maschinenkörpers 3 der Brennschneidmaschine mit Kühlwasser versorgt. Das untenliegende Teil des Kühlmantels 51 bzw. der Wandung des Maschinengehäuses 3 ist gebogen, um den Kühlmittelfluss zum Kühlmittelausgang 56 zu erleichtern.

An diese offene Kühlung der Brennschneidmaschine können andere Aggregate angeschlossen werden. Fig. 13 zeigt einen Brenner 4, der in die Maschinenkühlung des Brennschneidmaschinengehäuses 3 integriert ist, d.h. das Kühlmittel fliesst auch durch den Brenner 4 und tritt über einen Ablaufstutzen 57, der durch einen Halter 58 am Brenner 4 befestigt ist, aus. Dabei kann die Austrittsöffnung des Kühlmittels aus der offenen Maschinenkühlung so angeordnet sein, dass noch andere wichtige, ausserhalb der Brennschneidmaschine liegende Teile, beispielsweise im Rollgang, gekühlt werden. In Fig. 14 ist ein Klemmarm 6 dargestellt, der ebenfalls an die offene Kühlung des Maschinengehäuses 3 angeschlossen ist. Das Wasser strömt vom Kühlmantel 51 durch die hohl ausgestalteten Klemmarme 6 und tritt durch den Ablauf 58 aus. Wie Fig. 15 zeigt, ist es auch möglich, dass der Auslauf 59 für das Kühlwasser sich in der Nähe der Klemmbakken 7 befindet.

Durch die beschriebene offene Maschinenkühlung ist es möglich, die Strömung des Kühlwassers beispielsweise im Kühlmantel 51 durch geeignete Querschnitte zu regulieren, so dass die Strömung des Kühlwassers dem entsprechenden Kühlbedarf angepasst ist. Ebenso sind die Kühlwasserhohlräume so bemessen, dass eine Mindestreserve an Kühlmittel sichergestellt ist, so dass bei einer vorübergehenden Störung der Kühlwasserzufuhr die Brennschneidmaschine und die gegebenenfalls ihr zugeordneten Aggregate ausreichen geschützt sind.

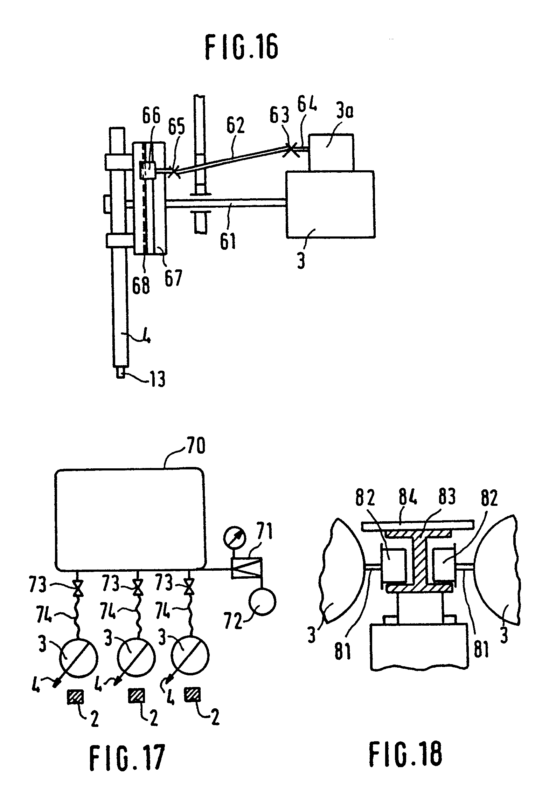

Fig. 16 zeigt ein Maschinengehäuse 3 einer Brennschneidmaschine, von dem eine Welle 61 für den Schneidbewegungsantrieb des Brenners 4 mit der Düse 13 ausgeht. Eine zweite Höhenverstellungsantriebswelle 62 ist über ein Kreuzgelenk 63 mit einer vom Maschinengehäuseteil 3a ausgehenden Abtriebswelle 64 an dem einen Ende verbunden und an dem anderen über ein Kreuzgelenk 65 mit der Achse eines Zahnrades 66, das von einer Schlittenführung 67 geführt ist und mit einer in dieser sitzenden Zahnstange 68 kämmt, die wiederum mit dem Brenner verbunden ist. Wird dem Zahnrad 66 über die Höhenverstellungsantriebswelle 62 eine Drehung erteilt, so verschiebt sich der Brenner 4 längs der Schienenführung 67 senkrecht in bezug auf den nicht dargestellten Giesstrang. Die Höhenverstellungsantriebswelle 62 kann auch als biegsame Welle ausgebildet sein, so dass die Gelenke überflüssig werden.

In Fig. 17 ist eine Brennschneidmaschinenanlage dargestellt, die drei Maschinengehäuse 3 aufweist, die mit Brenner 4 versehen sind, um Giessstränge 2 durchzutrennen. Die in Fig. 17 dargestellte Ringleitung 70 zur Zuführung der zum Betrieb der Brenner 4 erforderlichen Medien, werden gesonderte Regler für jeden Brenner 4 eingespart, indem nur ein Regler 71 erforderlich ist, der durch einen Stellmotor 72 über eine nicht dargestellte Fernsteuerung betätigt wird. Über den Regler 71 und die Ringleitung 70 werden so gemeinsam die Brenner 4 gesteuert. Für das sogenannte Pausenschneiden, bei dem der Betrieb des Brenners 4 unverzüglich unterbrochen werden muss, sind in den dargestellten Schneidsauerstoffzuführleitungen 74 Schnellentlüftungsventile 73 vorgesehen, die unverzüglich die Schneidsauerstoffzuführleitungen 74 beim Abschalten entleeren, so dass der Brennerbetrieb augenblicklich abgestoppt wird. Während in Fig. 17 nur eine Ringleitung 70 für den Schneidsauerstoff dargestellt ist, sind für die beiden weiteren Medien – den Heizsauerstoff und das Heizgas – Ringleitungen erforderlich, so dass neben einer Einsparung an Reglern und Stellmotoren für jedes Medium eine wirtschaftliche Fernsteuerung und Automatisierung mit Hilfe der Ringleitungen erreicht wird. Die Regler mit ihrer Fernsteuerung können entsprechend den baulichen Gegebenheitgen links oder rechts angeordnet sein. Auch ist es in konstruktiv sinnvoller Weise möglich, dass die Ringleitungen 70 in den Maschinenrahmen integriert sind. Weiter kann auch die Sauerstoffzuführung für die Bartbeseitigungs- bzw. Zünddüse durch die Ringleitung 70 erfolgen.

Eine entsprechende Steuerung ermöglicht es auch, zur Betätigung der Klemmarme 6 Sauerstoff oder Heizgas zu verwenden, wobei vorzugsweise zwischen den Anklemmhebeln 6 ein nicht dargestellter Balgzylinder vorgesehen ist, in den der Schneidsauerstoff oder das Heizgas eingeleitet wird.

Wie aus Fig. 17 zu ersehen ist, sind bei einer Brennschneidanlage oftmals mehrere Maschinengehäuse 3 eng nebeneinander gelagert. Um einerseits den Platzbedarf möglichst gering zu halten und andererseits eine Begehung der Anlage zwischen zwei Maschinengehäusen 3 zu ermöglichen, ist in Fig. 8 eine Lagerung zweier benachbarter Maschinengehäuse 3 über ihre an Achsen 81 befestigten Laufräder 82 auf einem Doppel-T-Träger 83 gezeigt. Während die Laufräder 82 auf dem unteren Flansch des T-Doppelträgers 83 abgestützt sind, trägt der obere Flansch einen Laufsteg 84, der zur Begehung der Anlage dient. Am Laufsteg 84 können nicht dargestellte Geländer befestigt sein.

**Patentansprüche**

1. Brennschneidmaschine (1) zum Zerteilen von sich bewegenden Strängen, insbesondere Knüppeln (2), mit einem stirnseitig am Maschinengehäuse (3) angeordneten Brenner (4), der schwenkbar gelagert (5) ist und während des Schneidvorgangs eine in Schneidrichtung verlaufende Schwenkbewegung etwa rechtwinklig zur Strangvorschubrichtung ausführt, wobei die Brennschneidmaschine (1) sich synchron mit dem Strang (2) bewegt, dadurch gekennzeichnet, dass dem vom Maschinengehäuse (3) zum Giesstrang (2) sich erstreckenden Brenner (4) eine Bartbeseitigungseinrichtung (10) zugeordnet ist, die mit dem Brenner (4) eine Schwenkbewegung ausführt und die aus einer Gaszuführröhre (9, 29, 39) und einer diese abschliessenden Bartbeseitigungsdüse (10) besteht, wobei eine Einrichtung, beispielsweise ein Getriebe, vorgesehen ist, die den Brenner (4) schneller bewegt als die Bartbeseitigungseinrichtung (10), und dass die Bartbeseitigungsdüse (10) in ihrer Betriebsstellung einen Gasstrom etwa rechtwinklig zum Gasaustritt des Brenners (4) aussendet, wobei der Düsenaustritt (12) der Bartbeseitigungsdüse (10) etwa im Bereich der Seitenfläche des Giessstranges (2) endet, wenn der Strang (2) vollständig durchgeschnitten ist, so dass der von der Bartbeseitigungsdüse (10) ausgehende Gasstrom an der Unterfläche (11) des Giessstranges (2) entlangstreicht.

2. Brennschneidmaschine nach Anspruch 1, dadurch gekennzeichnet, dass der Bartbeseitigungsdüse (10) etwa in einer Ebene senkrecht oder auch winklig zum Schneidstrahl der Brennschneiddüse (13) eine Gegenstromdüse (41) zugeordnet ist, die die Schlackenansammlung (40) herunterdrückt und verhindert, dass ausserhalb der Strömungsebene der Bartbeseitigungsdüse (10) ein verlagerter Schlackenbart sich bildet.

3. Brennschneidmaschine nach Anspruch 1 oder 2, dadurch gekennzeichnet, dass die Bartbeseitigungsdüse (10) einen Luft-, Sauerstoff- oder Gas-Sauerstoff-Gemischstrom in einem breiten Band aussendet, wobei die Einstellungsgenauigkeit die Bartbeseitigungswirkung nicht beeinträchtigt, und dass die Gegenstromdüse zum zusätzlichen Heizen und dadurch Flüssighalten der Schlacke (40) dient.

4. Brennschneidmaschine nach einem der Ansprüche 1-3, dadurch gekennzeichnet, dass die Bartbeseitigungsdüse als Viellochdüse mit einer grossen Anzahl von Gasaustritten ausgebildet ist oder aus einem quer verlaufenden Schlitz besteht von vorzugsweise 6 mm Breite und 26 mm Länge oder aus zwei Bohrungen (42), die durch einen Schlitz (43) verbunden sind, dessen Breite geringer als der Durchmesser der Bohrungen (43) ist.

5. Brennschneidmaschine nach einem der Ansprüche 1-4, dadurch gekennzeichnet, dass der Kühlmantel (51) einen offenen Einlaufstutzen (52) aufweist, in den Kühlwasser aus einer Kühlwasserzuführleitung (53, 54) fliesst, und das Kühlwasser aus einem offenen Ablaufstutzen (56) den Kühlmantelhohlraum (51) verlässt, dass die offene Maschinenkühlung auch die Brennerkühlung umfasst, indem Wasser aus dem Kühlmantel (51) über den Brenner (4) kühlende Kanäle (57) austritt, und dass das Wasser von dem Kühlmantel (51) durch hohl ausgebildete Klemmarme (6) strömt und im Bereich des Endes (58, 59) der Klemmarme (6) austritt, wobei die Strömung des Kühlwassers vorzugsweise durch geeignete Querschnitte reguliert ist und die Kühlwasserhohlräume eine Mindestreserve an Kühlmittel sicherstellen, so dass bei vorübergehender Störung in der Kühlwasserzufuhr die Brennschneidmaschine geschützt ist.

6. Brennschneidmaschine nach einem der Ansprüche 1-5, dadurch gekennzeichnet, dass im Maschinengehäuse (3) ein erster Schneidbewegungsantrieb und ein zweiter Höhenverstellungsantrieb (3a) vorgesehen sind und dass von beiden Antrieben gesonderte Antriebswellen (61, 62) sich aus dem Gehäuse (3, 3a) zum Brenner (4) erstrecken und dass die Welle (61) für den Schneidbewegungsantrieb fest gelagert ist und an ihrem Ende den Brenner (4) mit einer Schlittenführung (67) für die Höhenverstellung trägt, dass die Welle (62) für den Höhenverstellungsantrieb an ihrem dem Antrieb (3a) gegenüberliegenden Ende ein Zahnrad (66) aufweist, das in eine Zahnstange (68) eingreift, die auf der Schlittenführung (67) des Brenners (4) befestigt ist, und dass die Welle (62) für den Höhenverstellungsantrieb als biegsame Welle oder Gelenkwelle (63, 65) ausgebildet ist.

7. Brennschneidmaschine nach einem der Ansprüche 1-6, dadurch gekennzeichnet, dass für jedes zuzuführende Medium, wie Schneidsauerstoff, Heizsauerstoff und Heizgas, eine Ringleitung (70) vorgesehen ist, von der Versorgungsleitungen (74) für die einzelnen Brenner (4) abgehen, für die ein gemeinsamer Regler (71) in der Zuführleitung zur Ringleitung (70) vorgesehen ist, und dass in den Versorgungsleitungen (74) zwischen Ringleitung (70) und Brenner (4) Schnellentlüftungsventile (73) angeordnet sind, die vorzugsweise unmittelbar am Austritt der Versorgungsleitungen (74) aus der Ringleitung (70) angeordnet sind.

8. Brennschneidmaschine nach einem der Ansprüche 1-7, dadurch gekennzeichnet, dass die Gaszuführungen zur Ringleitung (70) und die Steuertafel mit den zugeordneten Reglern (71) wahlweise links oder rechts vom Giessstrang (2) montierbar sind, wobei die Sauerstoffzuführung zur Schneiddüse und Bartbeseitigungs- bzw. Zünddüse durch die Ringleitung (70) erfolgt und ein Rahmen der Brennschneidmaschine als Ringleitung (70) dient.

9. Brennschneidmaschine nach einem der Ansprüche 1-8, dadurch gekennzeichnet, dass zur Betätigung der Klemmarme (6) Sauerstoff oder Heizgas Verwendung findet, wobei vorzugsweise zwischen den Klemmarmen (6) ein Balgzylinder vorgesehen ist, in den Schneidsauerstoff oder Heizgas einleitbar ist.

10. Brennschneidmaschine nach einem der Ansprüche 1-9, dadurch gekennzeichnet, dass bei mehreren Maschinengehäusen (3) zwischen diesen Doppelschienen (83) vorgesehen sind, auf denen die Laufräder (82) benachbarter Maschinengehäuse (3) gemeinsam laufen, und dass vorzugsweise in der Mitte der Doppelschienen (83) zwischen den Laufrädern (82) nach oben verlaufende Stege (83) abgestützt sind, die einen Laufsteg (84) zur Begehung der Brennschneidmaschine tragen.

**Claims**

1. A torch-cutting apparatus (1) for parting off moving strands, more particularly billets (2), the apparatus having a burner (4) which is disposed on the end face of the apparatus casing (3), is pivotally mounted (5) and during cutting performs a pivoting movement in the cutting direction and substantially perpendicularly to the direction of strand advance, the apparatus (1) moving synchronously with the strand (2), characterised in that a deburring device (10) is associated with the burner (4) extending from the apparatus casing (3) to the strand (2), pivots with the burner (4) and comprises a gas supply tube (9, 29, 39) and a deburring nozzle (10) terminating the same, means such as a transmission being provided to move the burner (4) faster than the deburring device (10); and the deburring nozzle (10) when in its operative position emits a gas flow substantially at right-angles to the burner gas outlet, the exit or outlet (12) of the deburring nozzle (10) terminating somewhere near the side surface of the strand (2) after the same has been completely severed, so that the gas flow issuing from the nozzle (10) passes along the bottom surface (11) of the strand (2).

2. An apparatus according to claim 1, characterised in that a counterflow nozzle (41) is associated with the deburring nozzle (10), substantially in a plane perpendicular to or at an inclination to the cutting torch of the torch nozzle (13), presses the slag accumulation (40) downwards and prevents a displaced burr of slag from forming below the flow plane of the deburring nozzle (10).

3. An apparatus according to claim 1 or 2, characterised in that the deburring nozzle (10) emits a stream of air, oxygen or gas and oxygen mixed flow in a wide band, the deburring effect not impairing accuracy of adjustment, not impairing the deburring effect, and the counterflow nozzle is operative to provide additional heating of the slag (40) and thus to keep the same liquid.

4. An apparatus according to any of claims 1–3, characterised in that the deburring nozzle is a multiperorate nozzle formed with a large number of gas outlets or is embodied by a transverse slot measuring preferably 6 mm in width and 26 mm in length or by two bores 42 interconnected by slot 43 whose width is less than the diameter of the bores (42).

5. An apparatus according to any of claims 1–4, characterised in that the cooling jacket (51) has an open inlet connection (52) into which cooling water flows from a cooling water supply line (53, 54), the cooling water leaves the cooling jacket interior (51) by way of an open discharge connection (56), the open apparatus cooling comprises cooling of the burner by water issuing from the cooling jacket (51) through ducts (57) which cool the burner (4), and the water flows from the jacket (51) through hollow clamping arms (6) and issues near the end (58, 59) thereof, cooling water flow preferably being regulated by appropriate cross-sections, the cooling water spaces ensuring a minimum reserve of coolant so that the torch-cutting apparatus has protection in the event of a temporary disturbance in cooling water supply.

6. An apparatus according to any of claims 1–5, characterised in that a first cutting movement drive and a second vertical adjustment drive (3a) are provided in the casing (3), drive shafts (61, 62) separate from both drives extend out of the casing (3, 3a) to the burner (4), and the shaft (61) for the cutting movement (5) is fixedly mounted and carries at its end the burner (4) with a slide guide (67) for vertical adjustment, the shaft (62) for the vertical adjustment (5) has at its end remote from the drive (3a) a gear (66) meshing with a rack (68) secured to the slide guide (67) of the burner (4), and the shaft (62) for the vertical adjustment drive is a flexible or articulated shaft (63, 65).

7. An apparatus according to any of claims 1–6, characterised in that a ring main (70) is provided for each medium to be supplied, such as cutting oxygen, heating oxygen and heating gas, and supply lines (74) branch off the mains (70) for the various burners (4) for which a common controller (71) is provided in the lines supplying the ring mains (70), and rapid venting valves (73) are provided in the supply lines (74) and are disposed preferably directly at the exit of the supply lines (74) from the main (70).

8. An apparatus according to any of claims 1–7, characterised in that the gas supplies to the mains (70) and the control panel comprising the associated controllers (71) can be assembled at choice to the left or right of the strand (2), the supply of oxygen to the cutting nozzle and deburring or igniting nozzle being by way of the mains (70), a frame of the torch-cutting apparatus being operative as main (70).

9. An apparatus according to any of claims 1–8, characterised in that oxygen or heating gas is used to operate the clamping arms (6), a bellows cylinder being provided preferably between the clamping arms (6), cutting oxygen or heating gas being introducible into the bellows cylinder.

10. An apparatus according to any of claims 1–9, characterised in that if there are a number of casings (3), double rails (83) are provided between them and the running wheels (82) of adjacent casings (3) all run on the double rails, and webs (83) which extend upwardly between the wheels (82) are borne preferably in the centre of the rails (83) and carry a walkway (84) for walking on the apparatus.

**Revendications**

1. Machine d'oxycoupage (1) pour découper des barres de coulée en mouvement, en particulier des billettes (2) avec un chalumeau (4) disposé en bout du corps de machine (3) qui est monté pivotant (5) et qui, pendant l'opération de coupe, effectue un mouvement de pivotement dans le sens de la coupe, sensiblement perpendiculairement au sens d'avancement de la barre de coulée, le mouvement de déplacement de la machine d'oxycoupage (1) étant synchronisé avec celui de la barre (2), caractérisée en ce qu'il est associé au chalumeau (4) s'étendant du corps de machine (3) jusqu'à la barre de coulée (2) un dispositif d'ébavurage (10) qui effectue avec le chalumeau (4) un mouvement de pivotement et qui est constitué par une conduite d'arrivée de gaz (9, 29, 39) et par une buse d'ébavurage (10) terminant cette conduite, et qu'il est prévu un dispositif, par exemple un jeu d'engrenages, qui déplace le chalumeau (4) plus rapidement que le dispositif d'ébavurage (10), et en ce que la buse d'ébavurage (10), lorsqu'elle est dans sa position de fonctionnement, projette un jet de gaz dirigé sensiblement perpendiculairement à la sortie de gaz du chalumeau (4), l'orifice de sortie (12) de la buse d'ébavurage (10) se terminant approximativement dans la zone de la surface latérale de la barre de coulée (2) lorsque la barre (2) est entièrement découpée, de sorte que le jet de gaz sortant de la buse d'ébavurage (10) balaie la face inférieure (11) de la barre de coulée (2).

2. Machine d'oxycoupage selon la revendication 1, caractérisé en ce qu'il est associé à la buse d'ébavurage (10) une buse à contre-courant (41) disposée dans un plan sensiblement perpendiculaire ou bien oblique par rapport au jet d'oxycoupage de la buse d'oxycoupage (13) qui repousse vers le bas l'accumulation de scories (40) et empêche que se forme à l'extérieur du plan de projection de la buse d'ébavurage (10) une bavure de scorie décalée.

3. Machine d'oxycoupage selon la revendication 1 ou 2, caractérisé en ce que la buse d'ébavurage (10) projette un jet d'air, d'oxygène ou de mélange de gaz et d'oxygène sous la forme d'une large bande, la précision du réglage de l'effet d'ébavurage n'étant pas affectée, et que la buse à contre-courant sert à réchauffer les scories (40) et par conséquent à les maintenir liquides.

4. Machine d'oxycoupage selon l'une quelconque des revendications 1 à 3, caractérisé en ce que la buse d'ébavurage est une buse à perforations multiples présentant un grand nombre de sorties de gaz, ou bien se présente sous la forme d'une fente dirigée transversalement ayant de préférence une largeur de 6 mm et une longueur de 26 mm, ou encore est formée par deux trous (42) qui sont reliées par une fente (43) dont la largeur est inférieure au diamètre des trous (43).

5. Machine d'oxycoupage selon l'une quelconque des revendications 1 à 4, caractérisé en ce que la chemise de refroidissement (51) possède une tubulure d'entrée (52) ouverte dans laquelle coule l'eau de refroidissement sortant d'une conduite d'arrivée d'eau de refroidissement (53, 54), l'eau de refroidissement quittant l'espace creux de la chemise de refroidissement (51) par une tubulure de sortie (56) ouverte, que le système de refroidissement de machine ouvert comprend également le refroidissement du chalumeau consistant en ce que l'eau de refroidissement sort de la chemise de refroidissement (51) en empruntant des conduites (57) qui refroidissent le chalumeau (4) et que l'eau sortant de la chemise de refroidissement (51) passe dans des bras de serrage (6) creux et sort au niveau de l'extrémité (58, 59) des bras de serrage (6), l'écoulement de l'eau de refroidissement étant régulé de préférence grâce à des sections de passage appropriées, et les espaces creux occupés par l'eau de refroidissement, de sortie qu'en cas d'incident passager affectant l'arrivée de l'eau de refroidissement, la machine d'oxycoupage reste protégée.

6. Machine d'oxycoupage selon l'une quelconque des revendications 1 à 5, caractérisé en ce qu'il est prévu dans le corps de machine (3) une première commande d'entraînement de réglage en hauteur (3a) et que de ces deux commandes d'entraînement partent des arbres moteurs (61, 62) séparés qui s'étendent du corps de machine (3, 3a) jusqu'au chalumeau (4) et que l'arbre (61) pour la commande d'entraînement du mouvement de coupe est monté de façon fixe et porte à son extrémité le chalumeau (4) avec un guidage à chariot (67) pour le réglage en hauteur, que l'arbre (62) pour la commande d'entraînement du réglage en hauteur présente à son extrémité située à l'opposé de la commande d'entraînement (3a) une roue dentée (66) qui engrène dans une crémaillère (68) qui est fixée sur le guidage à chariot (67) du chalumeau (4) et que l'arbre (62) pour la commande d'entraînement du réglage en hauteur est un arbre flexible ou un arbre articulé (63, 65).

7. Machine d'oxycoupage selon l'une quelconque des revendications 1 à 6, caractérisé en ce qu'il est prévu pour chaque gaz à amener, tel qu'oxygène d'oxycoupage, oxygène de chauffage et gaz de chauffage, une conduite circulaire (70) d'où se détachent des conduites d'alimentation (74) pour les différents chalumeaux (4) pour lesquels il est prévu un régulateur (71) commun monté dans la conduite d'arrivée à la conduite circulaire (70) et que sont disposées dans les conduites d'alimentation (74) entre la conduite circulaire (70) et les chalumeaux (4) des soupapes d'échappement rapide (73) qui sont de préférence disposées à l'endroit même où les conduites d'alimentation (74) sortent de la conduite circulaire (70).

8. Machine d'oxycoupage selon l'une quelconque des revendications 1 à 7, caractérisé en ce que les conduites d'arrivée de gaz à la conduite circulaire (70) et le tableau de commande avec les régulateurs associés (71) peuvent être montés au choix soit à gauche soit à droite de la barre de coulée (2), l'arrivé de l'oxygène à la buse d'oxycoupage et à la buse d'ébavurage ou à la buse d'allumage s'effectuant par la conduite circulaire (70), et un bâti de la machine d'oxycoupage servant de conduite circulaire (70).

9. Machine d'oxycoupage selon l'une quelconque des revendications 1 à 8, caractérisé en ce qu'on utilise pour actionner les bras de serrage (6) l'oxygène ou le gaz de chauffage et il est prévu de préférence un cylindre à soufflet dans lequel est introduit l'oxygène d'oxycoupage ou le gaz de chauffage.

10. Machine d'oxycoupage selon l'une quelconque des revendications 1 à 9, caractérisé en ce que, dans une installation comportant plusieurs corps de machine (3), il est prévu entre ceux-ci des doubles rails (83) sur lesquels roulent ensemble les roues (82) des corps de machine (3) voisins et qu'il est prévu de préférence au milieu des doubles rails (83) des traverses (83) dirigées vers le haut prenant appui entre les roues (82) qui portent une passerelle (84) permettant la circulation pour le service de la machine d'oxycoupage.

Fig. 1

Fig. 2

Fig. 5

Fig. 4

Fig. 3

Fig. 6

Fig. 7

Fig. 8

0 121 589

FIG. 9

FIG.10

FIG.11

FIG.12

FIG. 13

FIG. 14

FIG. 15

## FIG.16

## FIG.17

## FIG.18